# EUROPEAN PATENT SPECIFICATION

(11) **EP 0 339 582 B1**
(45) Date of publication and mention of the grant of the patent: **14.12.1994**
(21) Application number: 89107487.4
(22) Date of filing: 25.04.1989
(51) Int. Cl.: G01N 21/64, G02B 21/16

(54) **Fluorescence microscope system**
Fluoreszenz-Mikroskopvorrichtung
Système de microscope à fluorescence

(30) Priority: 26.04.1988 JP 103545/88; 28.07.1988 JP 189453/88
(43) Date of publication of application: 02.11.1989
(73) Proprietor: OLYMPUS OPTICAL CO., LTD., Tokyo 151 (JP)
(72) Inventor: Tamagawa, Akira, Higashihirayama Hino-shi Tokyo (JP); Ozaki, Kazuho, Kitano-machi Hachioji-shi Tokyo (JP); Makino, Tohru, Honcho Koganei-shi Tokyo (JP); Miyakawa, Atsuo, Kata-machi Fuchu-shi Tokyo (JP)
(74) Representative: KUHNEN, WACKER & PARTNER

(56) References cited:
- EP-A- 0 106 721
- DE-B- 1 019 841
- JP-A-62 263 447
- US-A- 4 773 097
- PATENT ABSTRACTS OF JAPAN, vol. 2, no. 154, section E, 25th December 1978, page 9927 E 78; &JP-A-53 122 473

## Description

The present invention relates to a fluorescence microscope system which uses a fluorescence reagent as a probe and measures, for example, the concentration of the calcium ions or that of the hydrogen ions present in living cells. More particularly, the invention relates to a fluorescence microscope which can measure the concentration distribution of such ions within a predetermined planar area.

Measuring the concentration of free calcium ions within living cells, as well as the concentration of other ions (e.g., hydrogen ions) and gigantic molecules (e.g., protein or nucleic acid), in order to study the metabolic function of the cells, is a recent development in the fields of neuroscience and cell biology. All the methods to measure the concentration of ions and gigantic molecules employ a fluorescence reagent (hereinafter called "fluorescence probe") as a probe. The fluorescence probe is introduced into the living cells, and the concentration of a target chemical species is determined from the intensity of the fluorescent light emitted from the cells. The principle of measuring the concentration of a target chemical species will now be explained in detail.

When the fluorescence probe combines with a specific test substance, either its fluorescence spectrum or its excitation spectrum changes, the degree of the spectrum changes depending upon the concentration of the chemical species. Hence, the concentration of the chemical species can be measured from the degree of the spectrum changes. The degree of the spectrum changes can be determined by detecting the intensity of the fluorescent light being emitted from the chemical species by using of a fluorescence spectrophotometer or a fluorescence microscope. An example of a fluorescence probe is fura-2, which is used to measure the calcium ions in living cells. When introduced into the living cells, fura-2 combines with the calcium ions in a specific way, and its excitation spectrum changes. The degree of this spectrum change is measured by detecting the change in the intensity of the fluorescent light in a limited circular area of the fluorescent image of a cell, by using a fluorescence microscope.

Using the method described above, it is easy to measure the concentration of the calcium ions in a specific, but limited, area of a cell. However, it is difficult to determine the concentration distribution of calcium ions in a relatively large planar area. Since it is extremely important, in the fields of neuroscience and cell biology, that the concentration distribution of calcium ions be determined in a region containing several cells, this necessitates the taking of a number of samples and measuring of the concentration of calcium ions in each of these samples. This method is obviously laborious and time-consuming.

In order to promote the use of the above method of measuring the concentration of a target chemical species, a fluorescence probe must be developed which facilitates the measuring of the concentration of the chemical species, and an apparatus must also be developed which can measure the concentrations of the chemical species at various points in a relatively large planar area simultaneously and which can thus easily determine the concentration distribution of the chemical species therein.

The fluorescent light emitted from the flourescent probe introduced into a living cell is measured by a fluorescence microscope, also in order to detect the membrane potential of the cell. It is demanded that an apparatus be developed which can easily measure the distribution of potential in a relatively large planar area.

From the EP-A-0 106 721 a flourescence microscope system is known for measuring analytical characteristics of a sample. The analytical characteristics are measured by introducing a fluorescence probe into the sample, exciting the fluorescence probe with light and measuring the fluorescence response appearing in a localized zone of the sample. The system comprises a light source for emitting excitation light, a filter unit for allowing passage of excitation light beams of a predetermined wavelength, and a first optical system for causing the excitation light beams passed through said filter unit to fall onto a predetermined area of the sample into wich the fluorescence probe has been introduced. Furthermore, a first filter is provided being located in the optical path of the fluorescent light beam emitted from the predetermined area of the sample, in order to allow the passage of fluorescence light beams having a predetermined wavelenght. A drive mechanism moves said first filter such that fluorescence light beams of a desired wavelength may pass trough said first filter. Additionally, a beam splitter is arranged in the optical path of the fluorescence beams, for splitting the fluorescence light beams into first and second beams. A second optical system including an ocular lens focusses the first beams and forms a fluorescent image of the predetermined area of the sample. A third optical system focusses the second beam to a detection device which converts the fluorescence image into electric image data. Finally, an image processing device forms an image representing the distribution of values of the analytical characteristic by processing the image data provided by said detection device.

In view of the above, it is the object of the present invention to provide a fluorescence microscope system measuring the concentration distribution of a specified substance in a planar area or the concentration distribution of a membrane potential.

This object is solved by a fluorescence microscope according to claims 1 or 3.

This invention can be more fully understood from the following detailed description when taken in conjunction with the accompanying drawings, in which:
Fig. 1 is a spectrum diagram showing how the intensities of fluorescent light beams having a wavelength of 510nm and emitted from fura-2 contained in samples each having a different calcium ion concentration, change with the wavelength of the excitation light beam which has been applied to the samples;
Fig. 2 is a graph showing the relationship between the input and output of a TV camera;
Fig. 3 is a graph showing the relationship between the normalized I340/I360 ratio of fura-2 and the concentration of calcium ions;
Fig. 4 is a diagram representing the fluorescence spectrum of Indo-1, which is observed when excitation light having a wavelength of 340nm is applied to Indo-1 administered samples each containing calcium in a different concentration;
Fig. 5 is a graph showing the relationship between the normalized I410/I460 ratio of Indo-1 and the concentration of calcium ions;
Fig. 6 is a diagram schematically illustrating a fluorescence microscope system according to the present invention;
Fig. 7 is a block diagram showing the microscope system illustrated in Fig. 6;
Figs. 8 and 9 are diagrams, both showing the optical system used in the microscope system shown in Fig. 6;
Fig. 10 is a perspective view showing the filter unit incorporated in the system shown in Fig. 6, and also the optical components arranged near this filter unit;
Fig. 11 is a diagram illustrating the drive mechanism for moving the filter unit shown in Fig. 10;
Fig. 12 is a sectional view of a modification of the filter unit shown in Fig. 10;
Fig. 13 is a schematic representation of the image observed by means of the fluorescence microscope system shown in Fig. 6; and
Figs. 14 and 15 are diagram showing another fluorescence microscope system according to the present invention.

To facilitate the understanding of the fluorescence microscope system according to the present invention, the method of measuring the analytical characteristics such as the concentration of a substance contained in living cells, by utilizing a fluorescence probe, will be explained in greater detail.

In this method, a fluorescence probe is used whose excitation spectrum or fluorescence spectrum changes in accordance with the concentration or membrane potential of a living cell sample. For example, the fluorescence probes called fura-2, Quin-2, and Indo-1^{*} , all manufactured by Molecular Probes, Inc., can be used to measure the concentration of calcium ions.
^{*}(It should be noted that fura-2, Quin-2, and Indo-1 are trademarks of Molecular Probes, Inc.)

Fura-2 is identified by the following formula (I). This probe has free carboxyl group. Due to the free carboxyl group, fura-2 cannot pass through the membranes of established nerve cell line (NG108, N115), the membranes of established cell line resulting from glia cell (C6Bu-1), or the membrane of similar cells. Therefore, fura-2 is acetoxy-methyl-esterified, thus forming a derivative called fura-2/AM, and this derivative is administered into the sample cells. Fura-2/AM undergoes metabolism as soon as it is taken into the cells, and changes into fura-2 which is a free carboxyl ion. Fura-2 readily combines with calcium ions.

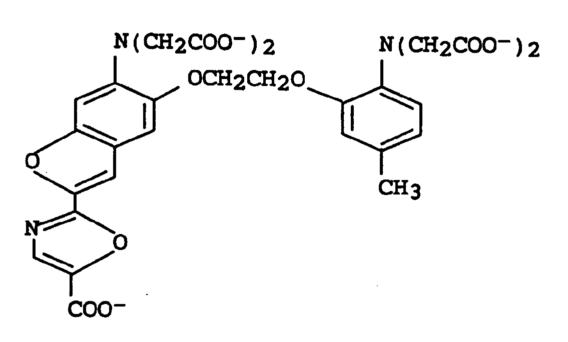

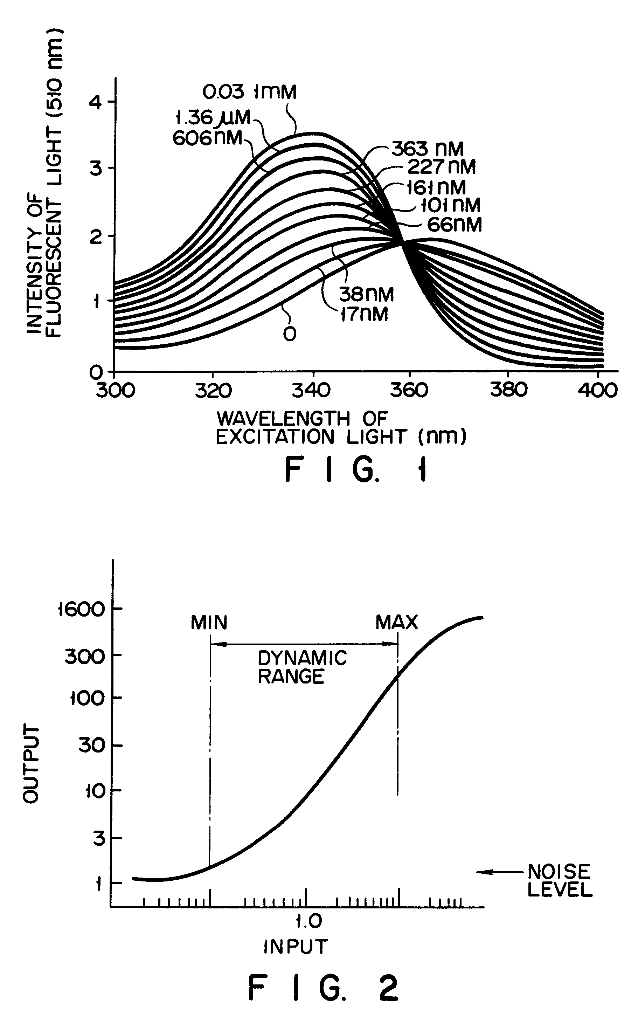

When fura-2 combines with the calcium ions, its excitation spectrum changes in accordance with the concentration of the calcium ions. The fluorescent light emitted from fura-2 has a single peak at wavelength of 510nm, and a band pass of 10nm. Fig. 1 is a spectrum diagram which represents the intensities of the fluorescent light beams having a wavelength of 510nm, which fura-2 contained in samples having different concentrations of calcium ions emitted when the excitation light beams having different wavelengths were applied to the samples. As can be understood from Fig. 1, the intensity of the fluorescent light emitted from fura-2 contained in any sample increased most greatly with the increment of calcium ion concentration when the excitation light beam applied to the sample had a wavelength of 340nm. Also, as is obvious from Fig. 1, when the excitation light beam having a wavelength of 360nm was applied to the samples, the intensity of the fluorescent light scarcely depends upon the concentration of calcium ions. Further, the intensity of the fluorescent light emitted from fura-2 contained in any sample decreased most greatly with the increment of the calcium ion concentration when the excitation light beam applied to the sample had a wavelength of 380nm.

As is evident from Fig. 1, the intensity of the fluorescent light beam depended on the concentration of calcium ions and changed in accordance with the wavelength of the excitation light beam applied to the sample. Therefore, the concentration of the calcium ions in a sample can be measured by applying two excitation beams having different wavelengths to the sample, obtaining the intensity ratio between the two fluorescent beams which fura-2 emits when the excitation beams are applied to the sample, and determining the concentration of the calcium ions from this intensity ratio. One of the two excitation beams must have a wavelength at which the fluorescent intensity increases most greatly, and the other excitation beam must have a wavelength at which the fluorescent intensity does not change or decreases most greatly. This method of measuring the concentration of the calcium ions makes it possible to standardize either the concentration and attenuation of the fluorescence probe, or the difference in the intensity of the excitation light beams. The method, wherein two excitation beams having wavelengths of 340nm and 360nm are used as a measuring beam and a reference beam, respectively, will be explained in detail.

As can be seen from Fig. 1, the ratio of the intensity I340 of the fluorescent beam emitted from fura-2 contained in a sample when the 340nm excitation beam is applied to the sample, to the intensity I360 fluorescent beam emitted from fura-2 when the 360nm excitation beam is applied to the sample varies from 0.64 to 1.89, depending upon the concentration of the calcium ions contained in the sample. It should be noted that the data shown in Fig. 1 has been obtained by measuring the intensities of the fluorescent beams by means of a fluorescence spectrophotometer. The data acquired by measuring the intensities of the fluorescent beams by a different device, such as fluorescence microscope, differs from the data shown in Fig. 1. Further, even when devices of the same type are used, the ratio of I340/I360 may differ from that measured by a device of the same type, due to the difference in the wavelength characteristics of the components. For example, the ratios of I340/I360 measured by two fluorescence microscopes differ when the microscope are different in the wavelength characteristics of the light source, lenses, and reflectors.

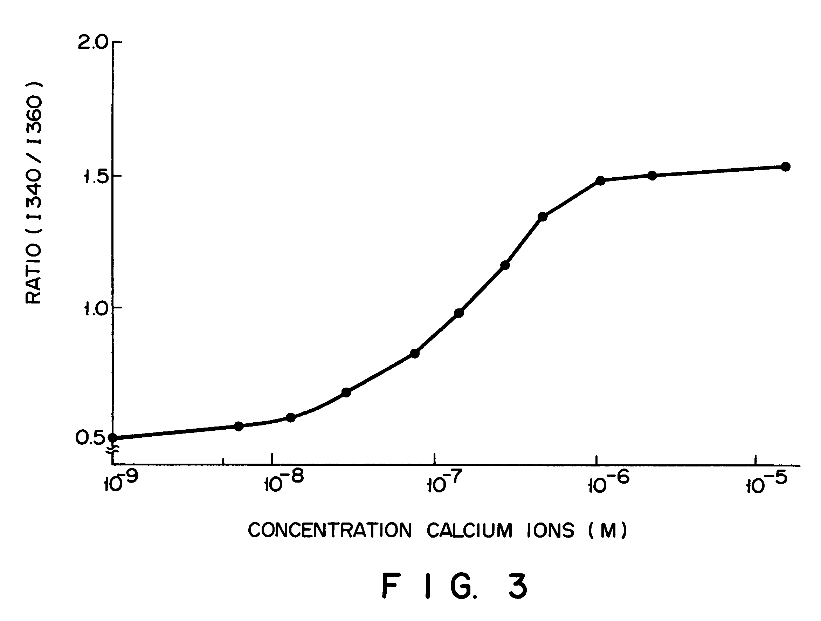

When a TV camera is used to measure the ratio of I340/I360, the dynamic range of the TV camera greatly influence the accuracy of the calcium concentration measured by the method described above. Generally, the input and output of a TV camera have the specific relationship which is illustrated in Fig. 2. As is evident from Fig. 2, this relationship has sufficient linearity only in a predetermined dynamic range. Hence, the value of I340/I360, i.e., the input of the TV camera, must vary within said dynamic range in order that the TV camera produces a sufficiently accurate output. To this end, it suffices to use a neutral density (ND) filter to adjust the intensity of the excitation beam such that the value of I340/I350 is normalized, that is, the median of this value becomes 1. Fig. 3 shows the relationship between the normalized value of I340/I360 and the calcium concentration. The data shown in Fig. 3 can be used as calibration curve for measuring the calcium concentration.

Indo-1, which can also be used to measure the concentration of calcium, is identified by the following formula (II). This fluorescence probe also has free carboxyl group, and cannot pass through the membranes of living cells. Hence, Indo-1 is acetoxy-methyl-esterified into a derivative called Indo-1/AM, and this derivative is introduced into the cells. Indo-1/AM does not combine with the calcium ions in the living cells. Rather, Indo-1, which has been formed due to the metabolism taking place in the cells, combines with the calcium ions.

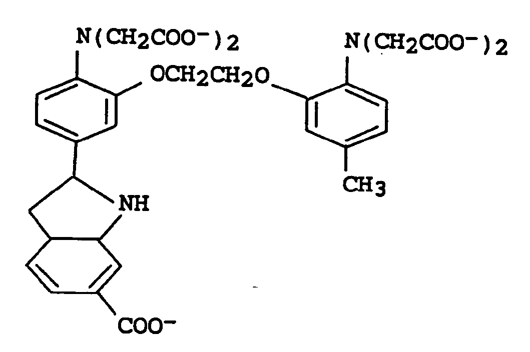

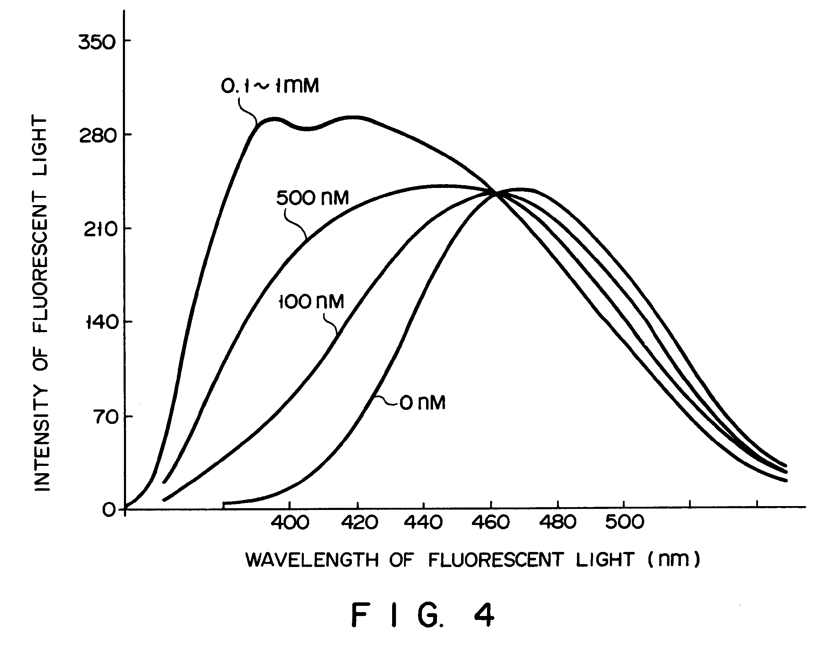

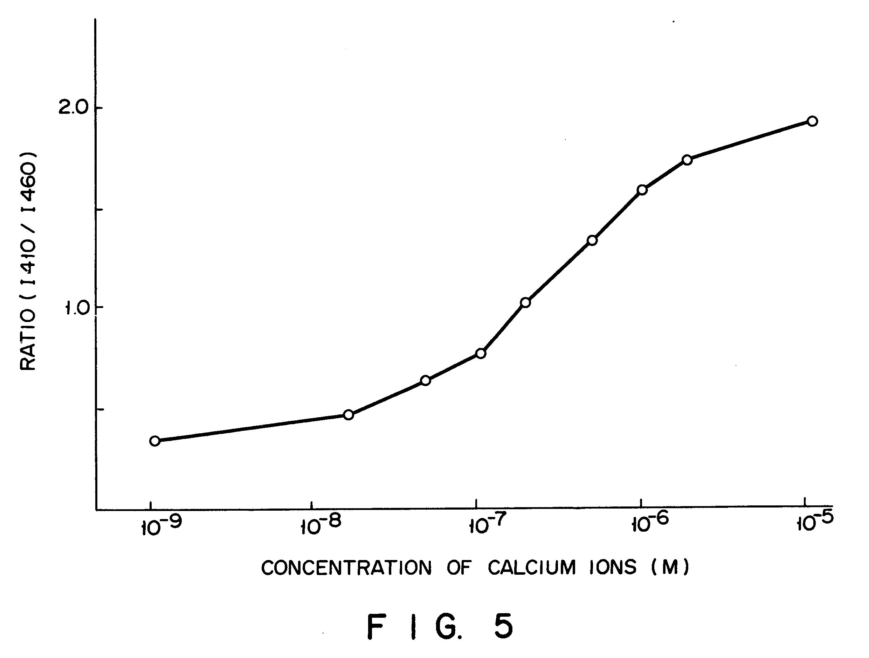

When Indo-1 is used, the fluorescent spectrum changes in accordance with the concentration of calcium ions, unlike in the case where fura-2 is used. Fig. 4 shows the fluorescence spectrum of Indo-1, which was observed when excitation light having a wavelength of 340nm is applied to Indo-1 administered samples each containing calcium in a different concentration. As this spectrum clearly shows, it is the fluorescent beam having a wavelength of about 410nm whose intensity increases most greatly with the concentration of calcium ions. By contrast, the intensity of the fluorescent beam which has a wavelength of 460nm does not change at all, regardless of the concentration of calcium ions. The intensity of a fluorescent beam, whose wavelength ranges from 460nm to 480, decreases with the concentration of calcium ions. Hence, the concentration of the calcium ions in a sample can be measured by two wavelengths measurement as in the case where fura-2 is used as fluorescence probe. In the case where Indo-1 is used as fluorescence probe, however, only one excitation beam having predetermined wavelength is applied to the sample, and intensity of two fluorescent beam having different wavelengths is detected. Beams having wavelengths of 410nm and 460nm are usually used as the two fluorescent beams. Alternatively, a 410nm beam and a 480nm beam can be used as the fluorescent beams. A TV camera is employed and detects the ratio of I410/I460 or the ratio of I410/I480. For the reason stated above in conjunction with the method using fura-2 as the fluorescence probe, the value of I410/I460 or I410/I480 is normalized. More precisely, this value is adjusted by an ND filter such that its median becomes 1. Fig. 5 represents the relationship between the normalized value of I410/I460 and the concentration of calcium ions. The curve showing this specific relationship can be used as calibration curve for measuring the concentration of calcium ions.

Quantitative analysis utilizing a fluorescence probe, which is similar to the analysis described above, can be applied to determine the concentration of a chemical species other than calcium, provided that a suitable florescence probe is available. For instance, such quantitative analysis can apply to the measuring of pH value, i.e., the concentration of hydrogen ions, by using 2′,7′-bis carboxyethyl carboxy fluorescein as fluorescence probe. This fluorescence probe is sold by Molecular Probes, Inc., under the trade name of "BCECF."

Further, a method similar to the one described above can be employed to measure the membrane potential of living cells, by using a fluorescence probe whose fluorescence or excitation spectrum changes with the intensity of the electric field applied on it. Usable as such a fluorescence probe is, for example, RH421 or RH460, either being a styrylic dye (see A. Grinvald et al., Biophys. J., 1982, pp. 30--308). This dye is fat-soluble and can, therefore, trapped within a cell membrane. Its fluorescence spectrum varies in accordance with the difference between the electrical potential within the cell and that outside the cell. Hence, when the dye is used as fluorescence probe, it is possible to measure the membrane potential of the living cell.

In the method explained above, the fluorescence light emitted from the sample is attenuated. The more intense the excitation light continuously applied to a sample, the greater the attenuation of the fluorescent light emitted from the fluorescence probe contained in the sample. When the intensity of the fluorescent light decreases below a predetermined value, it is no longer possible to measure analytical characteristic such as the concentration of calcium ions. The same problem also arises in the two wavelengths measurement case where two excitation beams or fluorescent beams having different wavelengths are used. It is therefore required that the excitation beam be as less intense as possible and be applied to the sample for a time as short as possible. The excitation beam must be shielded by means of a shutter or the like, unless it needs to be applied to the sample to measure the concentration of calcium ions.

Fluorescence microscope systems according to this invention will now be described, each being a combination of a fluorescence microscope, a TV camera, and an image-processing device, and designed to perform the above-mentioned quantitative analysis on a predetermine planer area, thus to determine the distribution of calcium concentration or the like, in the predetermined planer area.

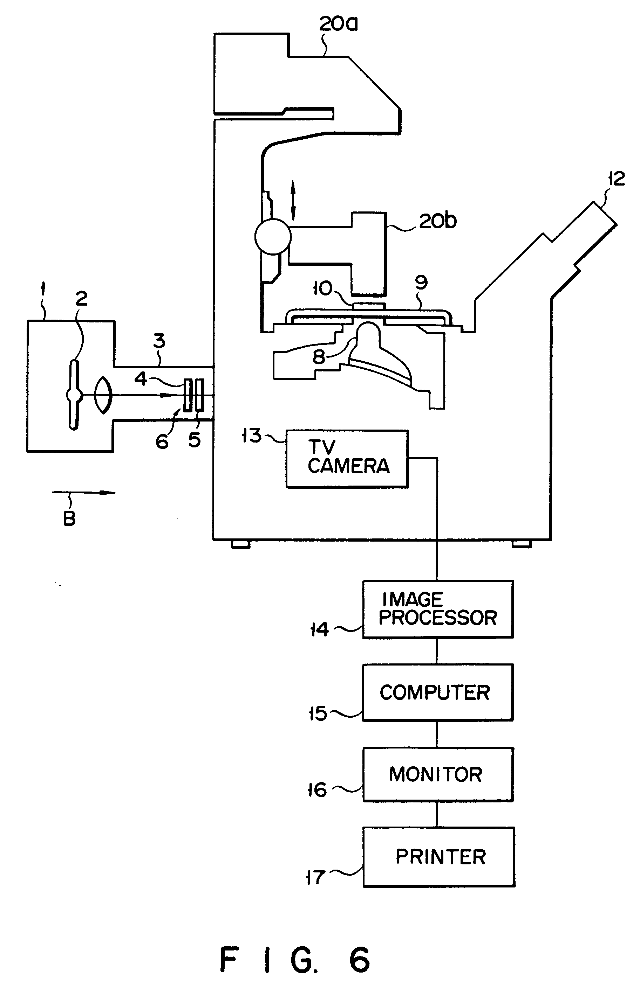

The fluorescence microscope system according to the first embodiment will be described, with reference to Figs. 6 to 13. This system is designed to analyze the changes of an excitation spectrum of fura-2 contained in a sample, thereby to measure the concentration of the calcium ions within the sample.

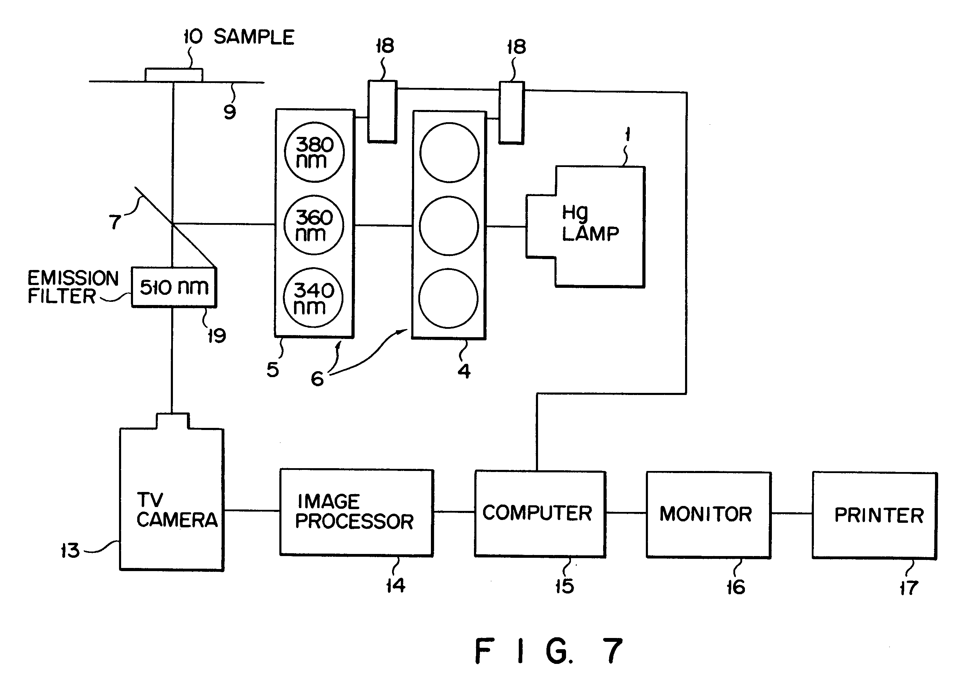

Fig. 6 is a diagram schematically illustrating the fluorescence microscope system, and Fig. 7 is a block diagram showing this system.

As is shown in Fig. 6, the fluorescence microscope system comprises an illumination device 1. The device 1 contains an mercury lamp 2 used as an excitation light source. The mercury lamp 2 can be replaced by any lamp such as a xenon lamp, which emits light having a desired wavelength. A light-projecting tube 3 is attached at one end to the illumination device 1, and at the other end to the housing of the fluorescent microscope system. The tube 3 contains a filter unit 6. The filter unit 6 comprises a neutral density (ND) filter 4 and an interference filter 5, and is located in the optical axis of the mercury lamp 2. The interference filter 5 can allow passage of only light beam having a predetermined wavelength. The ND filter 4 is designed to adjust the amount of light that can pass through the filter unit 6. The ND filter 4 can be dispensed with if the other conditions allow to omit the ND filter.

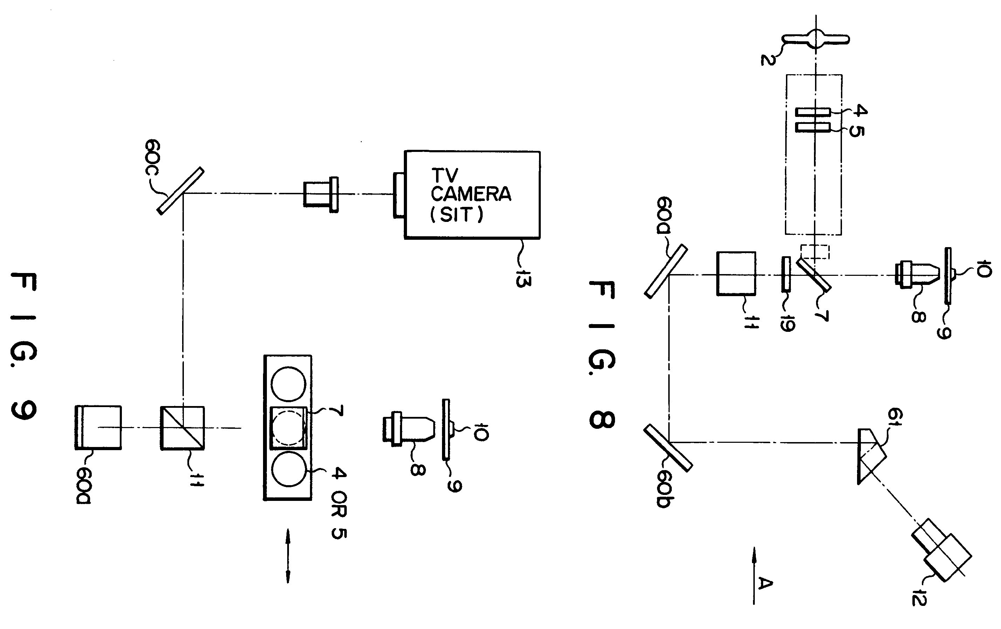

The light passing through the filter unit 6, which is used as excitation light, is applied to an objective lens 8 via the optical system shown in Fig. 8. The objective lens 8 focuses the excitation light onto sample cells 10 placed on a stage 9. Fura-2 has been introduced into the sample cells 10. Fura-2 is excited with the light, and emits fluorescent light. This fluorescent light passes through the optical system shown in Fig. 8 and observed through an ocular lens 12. The fluorescent light is also applied to a TV camera 13 via the optical system shown in Fig. 9. The TV camera 13 is connected to an image processor 14, which in turn is connected to a computer 15. The computer 15 is connected to a monitor 16, which in turn is coupled to a printer 17. In both optical systems shown in Figs. 8 and 9, the epi-fluorescent light is observed.

With this system it is possible not only to measure the concentration of the calcium ions within the sample cells 10 by the epi-fluorescent light, but also to perform usual microscopic examination of the sample cells 10. As is shown in Fig. 6, the system has a visible-light source 20a for use in microscopically examining the cells 10. The visible light which the visible-light source 20a emits is focused by a condenser lens 20b and applied onto the sample cells 10. The visible light passes through the cells 10, through the optical system shown in Fig. 8, and through the ocular lens 12. In other words, the visible light propagates through a passing-light path, whereby the microscopic examination of the cells 10 is made possible.

The fluorescence microscope system will be described in greater detail, with reference to Figs. 7, 8, and 9. As is illustrated in Fig. 7, the filter unit 6 has three ND filters 4 and three interference filters 5. The interference filters 5 allow passage of excitation light beams having wavelengths of 340nm, 360nm, and 380nm, respectively. The ND filters 4 and the interference filters 5 can be moved by stepping motors 18, across the optical axis of the illumination device 1. Therefore, whichever ND filter desired, and whichever interference filter desired can be located in the optical axis of the device 1, and can thus extract an excitation beam having the desired wavelength from the excitation light emitted from the mercury lamp 2. The ND filters 4 are used to adjust the amount of light which can pass through the interference filters 5. More precisely, two of the ND filters 4 may be employed to changes the incident excitation beams each having a different wavelength and a different intensity, to excitation beams having substantially identical intensities which are required to accomplish an accurate measuring of the concentration of the calcium ions within the sample cells 10.

The system further comprises another filter unit (not shown) including four ND filters having different transmittance ratios of 0%, 25%, 40%, and 100%. One of these ND filters is selected and used whenever the ocular lens 8 is replaced by another. The selected ND filter is located in the optical axis of the objective lens 8.

As is shown in Fig. 8, a dichroic mirror 7 is arranged in the optical axis of the mercury lamp 2 and right below the objective lens 8. The excitation light passing through the filter unit 6 is reflected by the dichroic mirror 7, and is applied through the objective lens 8 onto the sample cells 10. The fura-2 contained in the cells 10 emits fluorescent light, upon receipt of the excitation light. This epi-fluorescent light is applied to the dichroic mirror 7. The mirror 7 allow the fluorescent light pass through. Located immediately below the dichroic mirror 7 is an emission filter 19. This filter 19 allows passage of only the fluorescent beam having a wavelength of 510nm emitted from fura-2. The 510nm fluorescent beam is applied to a beam splitter 11. Part of this beam, about 20%, passes through the beam splitter 11. The 510nm fluorescent beam passing through the beam splitter 11 is reflected, first by a reflector 60a and then by a reflector 60b. The 510nm beam is then supplied to the ocular lens 12 through a prism 61.

As can be understood from Fig. 9, the beam splitter 11 splits the fluorescent beam passing through the emission filter 19, into two beams. The first beam, which amounts to 20% of the beam incident on the beam splitter 11, is guided to the ocular lens 12, as has been explained. The second beam, which amounts to 80% of the beam incident on the beam splitter 11, is emitted from the beam splitter 11 and propagates in the direction at right angles to the first beam. The second beam is reflected by a reflector 60c and applied to the TV camera 13.

As is illustrated in Fig. 7, the image processor 14 is connected to the TV camera 13. The image processor 14 has functions, to control the TV camera 13 and to accumulate the image data items output by the TV camera 13. The image processor 14 is coupled to the computer 15 with a built-in RAM disk. The computer 15 is connected to the monitor 16, which in turn is coupled to the printer 17. The computer 15 processes the image data items supplied from the image processor 14, thereby determining the concentration of the calcium ions within the sample cells 10 and also the distribution of the calcium concentration. The computer 15 is connected to the stepping motors 18, thus controlling these motors 18.

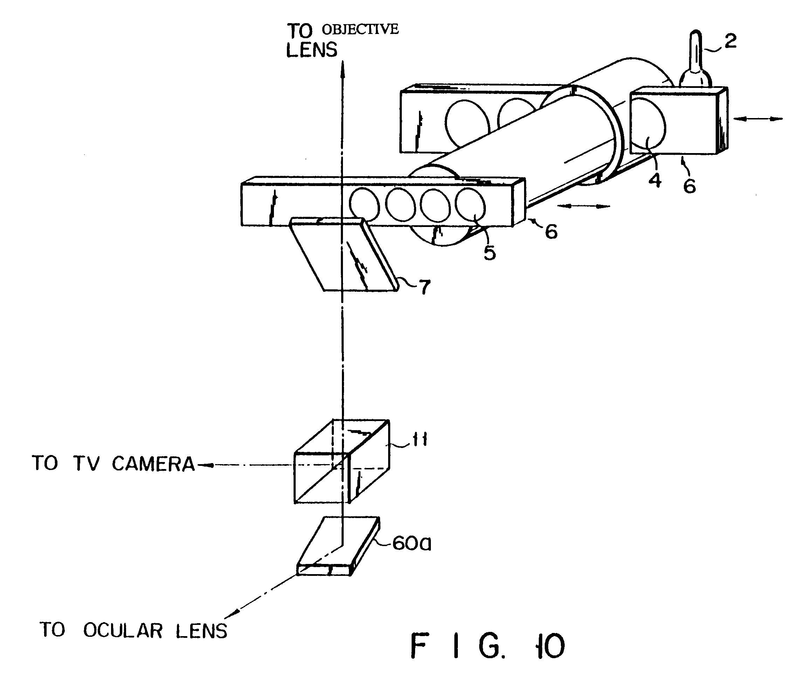

Fig. 10 is a perspective view showing the filter unit 6 and the components located near the unit 6. The stepping motors 18 are driven under the control of the computer 15, thereby moving the ND filters 4 and/or the interference filters 5 in the directions of the arrows shown in Fig. 10. As a result, the desired ND filter 4 and the desired interference filter 5 are placed in the optical axis of the mercury lamp 2.

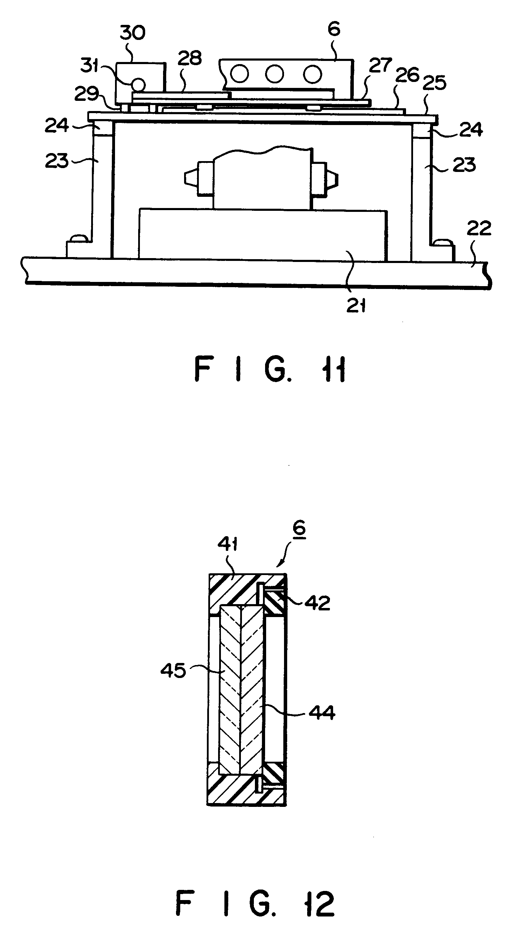

The ND filters 4 and the interference filters 5 can be connected together, as is illustrated in Fig. 12. If this is the case, the unit consisting of these filters 4 and 5 is fastened to a filter frame 41 by means of a holder 42.

The filter unit 6 is moved by the mechanism shown in Fig. 11. As is shown in Fig. 11, the housing 21 of the microscope is secured to a base 22. Poles 32 stand vertically on the base 22. Vibration absorbers 24, each made of rubber, are fastened to the tops of the poles 32. The base 25 of the mechanism is connected to the vibration absorbers 24. A straight guide rail 26 is mounted on the base 25. Two linear bearings are mounted on the guide rail 26, and two blocks are supported by these bearings. A movable table 27 is fastened to the blocks, and can therefore move along the guide rail 26. The filter unit 6 and a rack 28 are attached to the movable table 27. Vibration absorbers 29 are mounted on the base 26, and a motor 30 is supported by these vibration absorbers 29. A pinion 31 is fastened to the shaft of the motor 30, and put in mesh with the rack 28. Hence, when the motor 30 is driven, the rack 28 is moved horizontally. As a result of this, the filter unit 6 and the table 27 are moved together, in the horizontal direction.

The vibration absorbers 24 and 29, all incorporated in the mechanism for moving the filter unit 6, prevent the stage 9 from vibrating, even when the ND filters 4 and the interference filters 5 vibrate while being moved by the stepping motors 18. Hence, the sample cells 10 placed on the stage 9 are not vibrated at all, and their membranes are not torn by the styluses set in the cells 10 to measure the pH value and/or electric potential of the cells 10. Without the vibration absorbers 24 to 29, the cells 10 should vibrate, and their membranes should be broken, making it impossible to determine the pH value and/or the electric potential, along with the concentration of the calcium ions contained in the sample cells 10.

It will now be explained how the fluorescence microscope system described above is operated in order to measure the concentration of the calcium ions within the sample cells 10.
1. Preparation
   The data representative of the conditions under which to measure the concentration of the calcium ions is input to the computer 15. Further, a file of these conditions is prepared. If necessary, this file is corrected, stored, or deleted.
   (a) Preparation of the Condition File
      The following conditions (1) to (7) are input to the computer 15, thus preparing a table of measuring conditions. The table, thus prepared, is stored into the memory incorporated in the computer 15. If necessary, a file name is assigned to the table. The table is recorded, as a measuring-condition file, on a floppy disk.
      (1) Number of Images to Be Accumulated
         The number of images output by the TV camera 13, which must be accumulated to determine the concentration of the calcium ions, varies in accordance with the intensity of fluorescent light emitted from the sample cells, i.e., the brightness of the measuring view field. The brighter the view field, the less the number of images to be accumulated. In other words, the darker the view field, the greater the number of images to be accumulated. The number of images which must be accumulated determines the time required for measuring the calcium ion concentration. The time for accumulating the images, and the intervals at which the TV camera 13 form images depend upon the concentration of fura-2 contained in the cells 10, and also upon the degree by which the calcium ion concentration changes.
      (2) Measuring Time
         The time required for measuring the calcium ion concentration is:
         (1/30 sec × accumulation number of images) + time for image processing
      (3) Number of Times of Measuring
         Generally, the calcium ion concentration is measured 59 times or less, for the same sample cells.
      (4) The wavelength of the Excitation Light
         The wavelength of the excitation light is chosen in accordance with which fluorescent probe is used. When fura-2 is applied in measuring the calcium ion concentration by applying two excitation beams, either a 340nm beam and a 360nm beam, or a 340nm beam and a 380nm beam, are applied to the sample cells 10. When Indo-1 is used, a 340nm beam is applied to the sample cells 10.
      (5) Selection of the ND filters
         Which ND filter is selected depends upon the type of the source of the excitation light, the characteristics of the objective lens 8, and the like.
      (6) Selection of the Wavelength of the Measuring Light
         The wavelength for the measuring fluorescent light is selected in accordance with which fluorescence probe is employed. More specifically, when fura-2 is used, a 510nm is selected. When Indo-1 is used to measure the calcium ion concentration, two fluorescent beams, a 410nm beam and a 460nm beam, or a 410nm beam and a 480nm beam are used as measuring light beams.
      (7) Arrangement of Pixels
         Generally, a pixel matrix, in which at most 512 pixels form each column, and at most 512 pixels form each row, is employed.
   (b) Correction of the Measuring-Condition File
      To alter the measuring conditions (1) to (7) recorded on the floppy disk, the file of these conditions is read from the floppy disk into the memory incorporated in the computer 15. The file is corrected in the computer 15. If necessary, the corrected file is recorded on a floppy disk with a filing name.
2. Measurement Operation
   (a) Adjusting of the Microscope
      The operator look through the ocular lens 12 into the sample cells 10 into which a fluorescence probe has already been introduced. Looking at the enlarged view of the cells 10, he or she makes various adjustments on the microscope. For example, the operator inputs adjustment data to the computer 15, thereby adjusting the objective lens 8 to bring the image into focus, and adjusting the filter unit 6 to change the brightness of the image.
   (b) Registering of the Measuring Conditions
      The conditions under which to measure the calcium ion concentration automatically are registered in the computer 15.
   (c) Automatic Measuring
      The concentration of the calcium ions within the sample cells 10 is automatically measured under the conditions which have been registered in the computer 15, in the following way.
      (1) The fluorescent light emitted from the sample cells 10 is applied to the TV camera 13. The TV camera 13 converts the fluorescent beams applied to the pixels into electric signals, each having a magnitude proportional to the intensity of the fluorescent beam applied to the corresponding pixel. These electric signals, or image data, are input to the image processor 14. The TV camera 13 produces an image data item for each exposure period (e.g., 1/30 sec), and supplies the data item to the image processor 14. The image processor 14 accumulates a predetermined number of the image data items supplied from the TV camera 13, thus forming an image of the sample cells 10. The data representing this image is input to the computer 15.
      (2) The image data output by the image processor 14 is written into the frame memory provided in the computer 15. The image data is then recorded on the RAM disk also provided in the computer 15. In the case where two excitation beams of different wavelength or two fluorescent beams of different wavelength is employed, two image data items are obtained. Both image data items are recorded on the RAM disk. More specifically, when fura-2 is used as fluorescence probe, the first image data item is acquired from the fluorescent beam which fura-2 emits when excited by an excitation beam having a wavelength of 340nm, and the second image data item is produced from the fluorescent beam which fura-2 emits when excited by an excitation beam having a wavelength of 360nm.
      (3) The computer 15 compares the first and second image data items, for every pixel, in accordance with the image-processing program stored in the computer 15, thereby calculates an intensity ratio of, for example, I340/I360. Further, the computer 15 converts the intensity ratio into a calcium concentration in accordance with such an calibration curve as is illustrated in Fig. 3. A pseudo-color, which identifies the calcium concentration thus calculated, is assigned to the pixel. In other words, the same pseudo-color is assigned to the pixels showing the identical calcium concentrations, and different pseudo-colors are assigned to the pixels representing different calcium concentrations. Hence, the concentration of the calcium ions in each part of the cells 10 is identified with the pseudo-color of the corresponding pixel. The color image of the sample cells 10, which is formed of the pixels, shows the distribution of the calcium ion concentration in the cells 10.
   (d) Recording of the Image Data
      The image data obtained at any step of the automatic measuring of the calcium concentration and written on the RAM disk can be recorded, if necessary, on the floppy disk.
   (e) Outputting of the Image Data
      The image data recorded on the RAM disk or the floppy disk can be displayed on the screen of the monitor 16, in the form of a color image of the sample cells 10. From the color image it can be understood how the concentration of calcium ions is distributed in the sample cells 10. Moreover, the printer 17 can provide a hard copy of this color image of the cells 10.

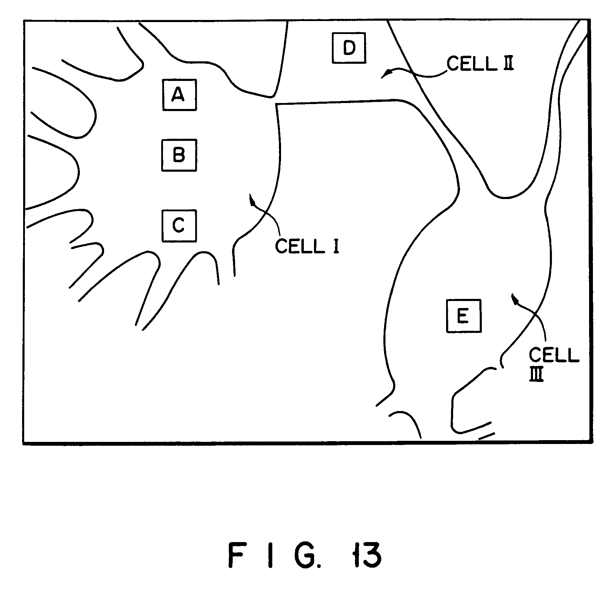

As can be obvious from the above, the fluorescence microscope system described above can form a color image of the sample cells, which indicates the distribution of the concentration of the calcium ions within the cells, by processing the image data items produced from the fluorescent beams collected by the fluorescence microscope incorporated in the system. More precisely, the system can provide such an image as is schematically shown in Fig. 13. This is an image of three cells I, II, and III. The concentrations of calcium ions, at points A to E in this image, are as follows:

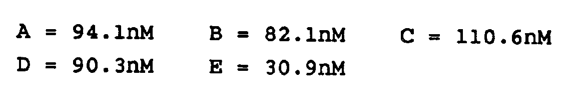

Although not demonstrated in Fig. 13, those portions of the three cells which are located at points A to E are displayed in different pseudo-colors representing different calcium concentrations. Hence, the calcium concentrations in these portions of the cells can be clearly understood at a glance of this color image.

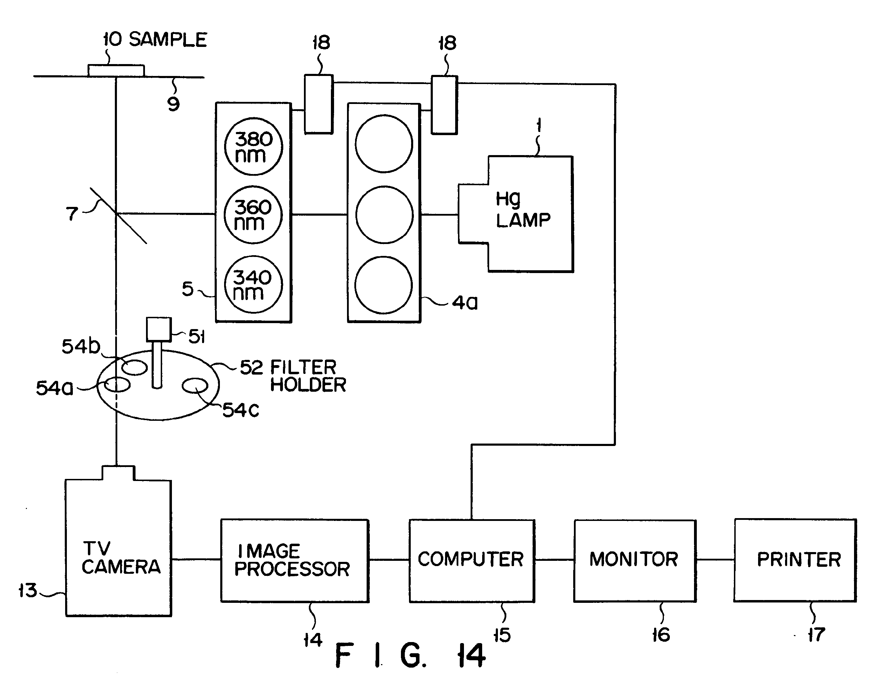

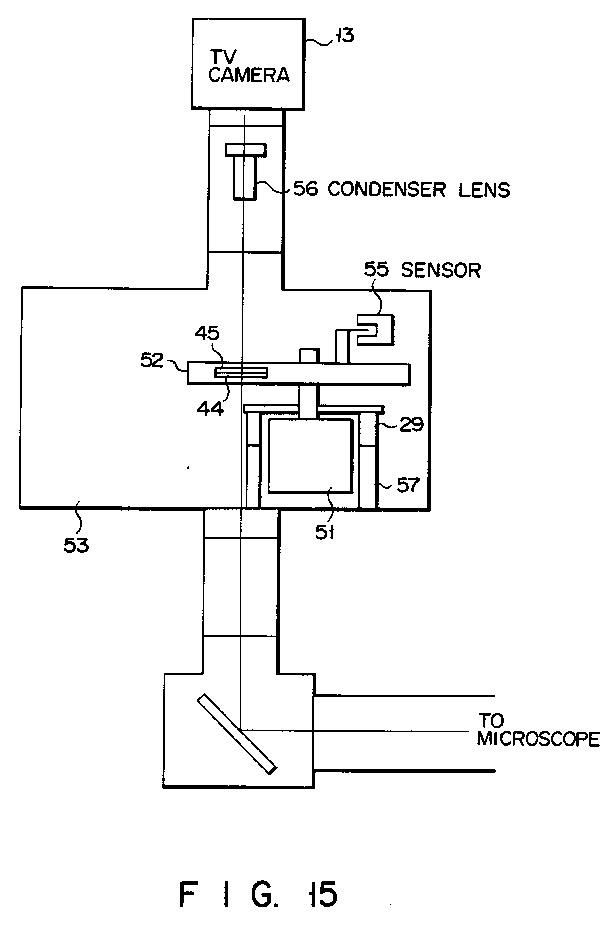

Another embodiment of the present invention will now be described, with reference to Figs. 14 and 15. This embodiment is a fluorescence microscope system which can measure the concentration of the calcium ions within living cells, by using Indo-1 as fluorescence probe and by detecting how the fluorescence spectrum of this probe changes.

Fig. 14 schematically illustrates this fluorescence microscope system. As the comparison of Fig. 15 with Fig. 7 may indicate, a filter holder 52 is used in place of the emission filter 19 used in the first embodiment (Fig. 7). As is evident from Fig. 16, the filter holder 52 is a disk having three through holes 54a, 54b, and 54c. The filter holder 52 is connected to a stepping motor 51. When the filter holder 52 is rotated by the stepping motor 51, one of the holes 54a, 54b, and 54c is brought into the optical path of the epi-fluorescent light.

As is shown in Fig. 15, the stepping motor 51 and the filter holder 52 are located within a light-shielding box 53. An interference filter 44 and a ND filter 45, one laid upon the other, are fitted in the through hole 54a of the filter holder 52. Similarly, an interference filter 44 and a ND filter 45, one laid upon the other, are fitted in the through hole 54b of the holder 52. The interference filter fitted in the hole 54a allows a light beam having a wavelength of about 410nm (410nm ± 10 to 20nm) to pass therethrough. The interference filter fitted in the hole 54b allows a light beam having a wavelength of about 460nm (460nm ± 10 to 20nm) to pass therethrough. The light beams passing through these interference filters 44 and also the ND filters 45 are used to measure the concentration of the calcium ions within sample cells which contains Indo-1 used as fluorescence probe. As is illustrated in Fig. 15, the system has a sensor 55 for positioning the filters, lens 56 for forming the epi-fluorescent image and a support 57 supporting the stepping motor 51. In all other structural aspects, the system is identical to the system illustrated in Figs. 6 to 12.

To measure the concentration of the calcium ions in the sample cells which contain Indo-1 employed as fluorescence probe, an excitation beam having a wavelength of 340nm is applied to the cells through one of the interference filters 5, as is shown in Fig. 14. The motor 51 rotates the filter holder 52 such that the interference filters 44, which allow passage of a 410nm beam and a 460nm beam, come into the optical axis of the condenser lens 56, one after the other. As a result, two fluorescent beams emitted from Indo-1 contained in the sample cells, and having wavelengths of 410nm and 460nm, respectively, are applied to the TV camera 13 through the image forming lens 56.

Since no interference filter is fitted in the through hole 54c of the filter holder 52, the system shown in Fig. 14 can measure the calcium concentration in the same way as the system shown in Figs. 6 to 12, by utilizing fura-2 as fluorescence probe, provided that the stepping motor 51 rotates the filter holder 52, thus placing the through hole 54c in the optical path of the epi-fluorescent light.

Either fluorescence microscope system described above, can not only measure the concentration of the calcium ions within living cells, but also determine the concentration of the hydrogen ions or gigantic moleculars (e.g., protein molecules) within living cells, and detect the membrane potential of living cells.

## Claims

1. A fluorescence microscope system for measuring the analytical characteristic of a sample (10) from either the fluorescence spectrum or the excitation spectrum of a fluorescence probe introduced into the sample, comprising:
a light source (1;2) for emitting excitation light to excite the fluorescent probe;
a filter unit (6) for filtering the excitation light emitted from said light source (1;2), having a plurality of interference filters (5) for allowing the passage of excitation light beams each having a different wavelength;
a drive mechanism (18; 26, 27, 28, 30, 31) for moving said first filter unit (6), thereby to position, in the optical axis of said light source (2), a specified interference filter allowing the passage of an excitation light beam of a desired wavelength;
a first optical system (7, 8) for causing the excitation light beam passing through said specified interference filter (5) to fall onto a predetermined area of a sample (10) into which a fluorescence probe has been introduced;
an interference filter (19) located in the optical path of the fluorescent light emitted from the specified area of the sample (10), for allowing the passage of only that beam of the fluorescent light which has a predetermined wavelength;
beam-splitting means (11) located in the optical path of the fluorescent light beam. passing through the interference filter (19), for splitting the fluorescent light beam into first and second beams;
a second optical system (60s, 60b, 61), including an ocular lens (12), for focusing the first beam, thereby to form a fluorescent image of the specified area of the sample (10);
a third optical system (60c, 56) for focusing the second beam, thereby to form a fluorescent image of the specified area of the sample (10);
a television camera (13) for converting, into electric image data, the fluorescent image formed by said third optical system (60c, 56); and
an image processing device (14, 15) for processing the image data provided by said television camera (13), thereby to form an image representing the distribution of the values of the analytical characteristic measured in the specified area of the sample (10); wherein said image processing device (15) obtains the value of the each portion of the sample (10) from the intensity of the fluorescent light beam supplied to that pixel of said television camera (13) which corresponds to that portion of the sample (10), in accordance with an calibration curve already input to said image processing device (15), and forms an image which represents the distribution of the values of the portions of the sample (10); said value of the analytical characteristic at each portion of the sample (10) is calculated from the ratio between the intensities of two fluorescent light beams which the fluorescence probe emits when excited by two excitation beams having different wavelengths.

2. A fluorescence microscope system according to claim 1, characterized in that said interference filter (19) for filtering the fluorescent light is a second filter unit (52) comprising a plurality of interference filters (44) which allow the passage of fluorescent light beams each having a different wavelength; and a drive mechanism (51, 55) is provided for moving the second filter unit, thereby to position, in the optical path of said fluorescent light, a specified interference filter (44) of said second filter unit (52) which allows the passage of a fluorescent light beam of a desired wavelength.

3. A fluorescence microscope system for measuring the analytical characteristic of a sample from either the fluorescence spectrum or the excitation spectrum of a fluorescence probe introduced into the sample, characterized by comprising:
a light source (2) for emitting excitation light to excite the fluorescence probe;
an interference filter (5) located in the optical axis of said light source (2), for allowing the passage of only that beam of the excitation light which has a predetermined wavelength;
a first optical system (7, 8) for causing the excitation light beam passing through said interference filter (5) to fall onto a specified area of a sample (10) into which a fluorescence probe has been introduced;
a filter unit (52) for filtering the fluorescent light emitted from the specified area of the sample (10) when the excitation light beam is applied to this area, said unit (52) having a plurality of interference filters (44) for allowing the passage of fluorescent light beams each having a different wavelength;
a drive mechanism (51, 55) for moving said filter unit (52), thereby to position, in the optical path of the fluorescent light, a specified interference filter (44) allowing the passage of a fluorescent light beam of a desired wavelength;
beam-splitting means (11) located in the optical path of the fluorescent light beam passing through the specified interference filter (44), for splitting the fluorescent light beam into first and second beams;
a second optical system (60a, 60b, 61), including an ocular lens (12), for focusing the first beam, thereby to form a fluorescent image of the specified area of the sample (10);
a third optical system (60c, 56) for focusing the second beam, thereby to form a fluorescent image of the specified area of the sample (10);
a television camera (13) for converting, into electric image data, the fluorescent image formed by said third optical system (60c, 56); and
an image processing device (14, 15) for processing the image data provided by said television camera (13), thereby to form an image representing the distribution of the values of the analytical characteristic measured in the specified area of the sample (10); wherein said image processing device (15) obtains the value of the each portion of the sample (10) from the intensity of the fluorescent light beam supplied to that pixel of said television camera (13) which corresponds to that portion of the sample (10), in accordance with an calibration curve already input to said image processing device (15), and forms an image which represents the distribution of the values of the portions of the sample (10); said analytical characteristic at each portion of the sample (10) is calculated from the ratio between the intensities of two fluorescent light beams. having different wavelengths.

4. A fluorescence microscope system according to claim 1, 2 or 3, characterized by further comprising vibration-absorbing means (24, 29) attached to said drive mechanism (18; 26, 27, 28, 30, 31).

5. A fluorescence microscope system according to any one of claims 1 to 4, characterized in that said first filter unit (6) and/or said second filter unit (52) or said filter unit (52) is a combination of interference filters (5, 44) and neutral density filters (4, 45).

6. A fluorescence microscope system according to any one of claims 1 to 5, characterized by further comprising a visible-light source (20a) for supplying visible light required for microscope examination of the sample (10).

7. A fluorescence microscope system according to anyone of the preceding claims 1 to 6, characterized in that said image processing device (15) assigns a specific color to the value of the analytical characteristic at each portion of the sample (10), thereby to form a color image which represents the distribution of the values of the portions of the sample (10).

## Patentansprüche

1. Ein Fluoreszenzmikroskopsystem, um die analytische Charakteristik einer Probe (10) aus entweder dem Fluoreszenzspektrum oder dem Anregungsspektrum einer Fluoreszenzsonde, welche in die Probe eingeführt wurde, zu messen, umfassend:
eine Lichtquelle (1; 2) zum Emittieren von Anregungslicht, um die Fluoreszenzsonde anzuregen;
eine Filtereinheit (6) zum Filtern des Anregungslichtes, welches von der Lichtquelle (1; 2) emittiert wird, mit einer Mehrzahl von Interferenzfiltern (5), um den Durchgang von Anregungslichtstrahlen zu erlauben, wobei jeder eine verschiedene Wellenlänge hat;
einen Antriebsmechanismus (18; 26, 27, 28, 30, 31) zum Bewegen der ersten Filtereinheit (6), um dadurch einen bestimmten Interferenzfilter, welcher den Durchgang eines Anregungslichtstrahls einer gewünschten Wellenlänge erlaubt, in der optischen Achse der Lichtquelle (2) zu positionieren;
ein erstes optisches System (7, 8) um zu bewirken, daß der Anregungslichtstrahl, der den bestimmten Interferenzfilter (5) durchquert, auf eine vorbestimmte Fläche einer Probe (10) fällt, in welche eine Fluoreszenzsonde eingeführt wurde;
einen Interferenzfilter (19), welcher in dem Lichtweg des Fluoreszenzlichtes, das von der bestimmten Fläche der Probe (10) emittiert wird, angeordnet ist, um nur den Durchgang von dem Strahl des Fluoreszenzlichtes zu erlauben, welches eine vorbestimmte Wellenlänge hat;
strahlenteilende Mittel (11), welche in dem Lichtweg des Fluoreszenzlichtstrahls, welcher den Interferenzfilter (19) durchquert, angeordnet sind, um den Fluoreszenzlichtstrahl in erste und zweite Strahlen zu teilen;
ein zweites optisches System (60s, 60b, 61), welches eine Okularlinse (12) einschließt, um den ersten Strahl zu fokussieren, um dadurch ein Fluoreszenzbild der bestimmten Fläche der Probe (10) zu bilden;
ein drittes optische System (60c, 56), um den zweiten Strahl zu fokussieren, um dadurch ein Fluoreszenzbild der bestimmten Fläche der Probe (10) zu bilden;
eine Fernsehkamera (13), um das Fluoreszenzbild, welches durch das dritte optische System (60c, 56) gebildet wurde, in elektrische Bilddaten umzuwandeln; und
eine bildverarbeitende Vorrichtung (14, 15) zum Bearbeiten der Bilddaten, die durch die Fernsehkamera (13) geliefert wurden, um dadurch ein Bild zu bilden, welches die Verteilung der Werte der analytischen Charakteristik, die in der bestimmten Fläche der Probe (10) gemessen wurde, darzustellen; worin
die bildverarbeitende Vorrichtung (15) den Wert von jedem Bereich der Probe (10) durch die Intensität des Fluoreszenzlichtstrahls, der zu dem Bildpunkt der Fernsehkamera (13) geliefert wurde, der diesem Bereich der Probe (10) entsprach, gemäß einer Kalibrierungskurve, die schon in die bildverarbeitende Vorrichtung (15) eingegeben ist, erhält, und ein Bild bildet, welches die Verteilung der Werte der Bereiche der Probe (10) darstellt; wobei
der Wert der analytischen Charakteristik in jedem Bereich der Probe (10) aus dem Verhältnis zwischen den Intensitäten von zwei Fluoreszenzlichtstrahlen, welche die Fluoreszenzsonde emittiert, wenn sie durch zwei Anregungsstrahlen mit verschiedenen Wellenlängen angeregt wird, berechnet wird.

2. Ein Fluoreszenzmikroskopsystem gemäß Anspruch 1, dadurch gekennzeichnet, daß der Interferenzfilter (19) zum Filtern des Fluoreszenzlichtes eine zweite Filtereinheit (52) ist, welche eine Mehrzahl von Interferenzfiltern (44) umfaßt, welche den Durchgang von Fluoreszenzlichtstrahlen erlaubt, wobei jeder eine verschiedene Wellenlänge hat; und einen Antriebsmechanismus (51, 55) zum Bewegen der zweiten Filtereinheit zur Verfügung gestellt wird, um damit einen bestimmten Interferenzfilter (44) der zweiten Filtereinheit (52), welcher den Durchgang eines Fluoreszenzlichtstrahls einer gewünschten Wellenlänge erlaubt, in dem Lichtweg des Fluoreszenzlichtes zu positionieren.

3. Ein Fluoreszenzmikroskopsystem, um die analytische Charakteristik einer Probe aus entweder dem Fluoreszenzspektrum oder dem Anregungsspektrum einer Fluoreszenzsonde, welche in die Probe eingeführt wurde, zu messen, dadurch gekennzeichnet, daß es umfaßt:
eine Lichtquelle (2) zum Emittieren von Anregungslicht, um die Fluoreszenzsonde anzuregen;
einen Interferenzfilter (5), welcher in der optischen Achse der Lichtquelle (2) angeordnet ist, um nur den Durchgang von dem Strahl des Anregungslichtes zu erlauben, welcher eine vorbestimmte Wellenlänge hat;
ein erstes optisches System (7, 8) um zu bewirken, daß der Anregungslichtstrahl, der den Interferenzfilter (5) durchquert, auf eine bestimmte Fläche einer Probe (10) fällt, in welche eine Fluoreszenzsonde eingeführt wurde;
eine Filtereinheit (52) zum Filtern des Fluoreszenzlichtes, welches von der bestimmten Fläche der Probe (10) emittiert wurde, wenn der Anregungslichtstrahl auf diese Fläche angewendet wird, wobei die Einheit (52) eine Mehrzahl von Interferenzfiltern (44) aufweist, um den Durchgang von Fluoreszenzlichtstrahlen zu erlauben, wobei jeder eine verschiedene Wellenlänge hat;
einen Antriebsmechanismus (51, 55) zum Bewegen der Filtereinheit (52), um dadurch einen bestimmten Interferenzfilter (44), welcher den Durchgang eines Anregungslichtstrahls einer gewünschten Wellenlänge erlaubt, in dem Lichtweg des Fluoreszenzlichtes zu positionieren;
strahlenteilende Mittel (11), welche auf dem Lichtweg des Fluoreszenzlichtstrahls, welcher den bestimmten Interferenzfilter (44) durchquert, angeordnet sind, um den Fluoreszenzlichtstrahl in erste und zweite Strahlen zu teilen;
ein zweites optisches System (60a, 60b, 61), welches eine Okularlinse (12) einschließt, um den ersten Strahl zu fokussieren, um dadurch ein Fluoreszenzbild der bestimmten Fläche der Probe (10) zu bilden;
ein drittes optische System (60c, 56), um den zweiten Strahl zu fokussieren, um dadurch ein Fluoreszenzbild der bestimmten Fläche der Probe (10) zu bilden;
eine Fernsehkamera (13), um das Fluoreszenzbild, welches durch das dritte optische System (60c, 56) gebildet wurde, in elektrische Bilddaten umzuwandeln; und
eine bildverarbeitende Vorrichtung (14, 15) zum Bearbeiten der Bilddaten, die durch die Fernsehkamera (13) geliefert wurden, um dadurch ein Bild zu bilden, welches die Verteilung der Werte der analytischen Charakteristik, die in der bestimmten Fläche der Probe (10) gemessen wurde, darzustellen; worin
die bildverarbeitende Vorrichtung (15) den Wert von jedem Bereich der Probe (10) durch die Intensität des Fluoreszenzlichtstrahls, der zu dem Bildpunkt der Fernsehkamera (13) geliefert wurde, der dem Bereich der Probe (10) entsprach, gemäß einer Kalibirierungskurve, die schon in die bildverarbeitende Vorrichtung (15) eingegeben ist, erhält, und ein Bild bildet, welches die Verteilung der Werte der Bereiche der Probe (10) darstellt; wobei
die analytische Charakteristik in jedem Bereich der Probe (10) aus dem Verhältnis zwischen den Intensitäten von zwei Fluoreszenzlichtstrahlen mit verschiedenen Wellenlängen berechnet wird.

4. Ein Fluoreszenzmikroskopsystem gemäß Anspruch 1, 2 oder 3, dadurch gekennzeichnet, daß es weiterhin vibrationsdämpfende Mittel (24, 29) umfaßt, die an dem Antriebsmechanismus (18; 26, 27, 28, 30, 31) angebracht sind.

5. Ein Fluoreszenzmikroskopsystem gemäß einem der Ansprüche 1 bis 4, dadurch gekennzeichnet, daß die erste Filtereinheit (6) und/oder die zweite Filtereinheit (52) oder die Filtereinheit (52) eine Kombination aus Interferenzfiltern (5, 44) und Neutralfiltern (4, 45) ist.

6. Ein Fluoreszenzmikroskopsystem gemäß einem der Ansprüche 1 bis 5, dadurch gekennzeichnet, daß es weiterhin eine Quelle mit sichtbarem Licht (20a) umfaßt, um sichtbares Licht, welches für eine mikroskopische Untersuchung der Probe (10) benötigt wird, zu liefern.

7. Ein Fluoreszenzmikroskopsystem gemäß einem der Ansprüche 1 bis 6, dadurch gekennzeichnet, daß die bildverarbeitende Vorrichtung (15) dem Wert der analytischen Charakteristik in jedem Bereich der Probe (10) eine bestimmte Farbe zuweist, um dadurch ein Farbbild zu bilden, welches die Verteilung der Werte der Bereiche der Probe (10) darstellt.

## Revendications

1. Système de microscope à fluorescence pour mesurer la caractéristique analytique d'un échantillon (10) à partir soit du spectre de fluorescence, soit du spectre d'excitation d'une sonde à fluorescence introduite dans l'échantillon, comprenant :
- une source lumineuse (1 ; 2) pour émettre une lumière d'excitation afin d'exciter la sonde fluorescente ;
- un dispositif de filtrage (6) pour filtrer la lumière d'excitation émise par ladite source lumineuse (1 ; 2), ce dispositif comportant une pluralité de filtres d'interférence (5) pour permettre le passage de faisceaux de lumière d'excitation ayant chacun une longueur d'onde différente ;
- un mécanisme d'entraînement (18 ; 26, 27, 28, 30, 31) pour déplacer ledit premier dispositif de filtrage (6), de manière à positionner ainsi, dans l'axe optique de ladite source lumineuse (2), un filtre d'interférence spécifié permettant le passage d'un faisceau de lumière d'excitation ayant une longueur d'onde désirée ;
- un premier système optique (7, 8) pour amener le faisceau de lumière d'excitation à traverser ledit filtre d'interférence spécifié (5) de manière qu'il tombe sur une zone prédéterminée d'un échantillon (10) dans lequel une sonde à fluorescence a été introduite ;
- un filtre d'interférence (19) placé dans le trajet optique de la lumière fluorescente émise par la zone spécifiée de l'échantillon (10) pour permettre le passage uniquement du faisceau de lumière fluorescente qui a une longueur d'onde prédéterminée ;
- un moyen diviseur de faisceau (11) placé dans le trajet optique du faisceau de lumière fluorescente traversant le filtre d'interférence (19) pour diviser le faisceau de lumière fluorescente en des premier et second faisceaux ;
- un second système optique (60s, 60b, 61), comprenant une lentille d'oculaire (12), pour focaliser le premier faisceau, de manière à former ainsi une image fluorescente de la zone spécifiée de l'échantillon (10) ;
- un troisième système optique (60c, 56) pour focaliser le second faisceau, de manière à former ainsi une image fluorescente de la zone spécifiée de l'échantillon (10) ;
- un caméra de télévision (13) pour convertir en données d'image électriques l'image fluorescente formée par ledit troisième système optique (60c, 56) ; et
- un dispositif (14, 15) de traitement d'image pour traiter les données d'image fournies par ladite caméra de télévision (13), de manière à former ainsi une image représentant la distribution des valeurs de la caractéristique analytique mesurée dans la zone spécifiée de l'échantillon (10) ; système dans lequel :
- ledit dispositif (15) de traitement d'image obtient la valeur de chaque partie de l'échantillon (10) à partir de l'intensité du faisceau de lumière fluorescente fournie au pixel de ladite caméra de télévision (13) qui correspond à cette partie de l'échantillon (10), conformément à une coupe d'étalonnage déjà introduite dans ledit dispositif (15) de traitement d'image, et forme une image qui représente la distribution des valeurs des parties de l'échantillon (10) ;
- ladite valeur de la caractéristique analytique à chaque partie de l'échantillon (10) est calculée à partir du rapport entre les intensités des deux faisceaux de lumière fluorescente que la sonde à fluorescence émet lorsqu'elle est excitée par deux faisceaux d'excitation ayant des longueurs d'onde différentes.

2. Système de microscope à fluorescence selon la revendication 1, **caractérisé** en ce que ledit filtre d'interférence (19) destiné à filtrer la lumière fluorescente est un second dispositif de filtrage (52) comprenant une pluralité de filtres d'interférence (44) qui permettent le passage des faisceaux de lumière fluorescente ayant chacun une longueur d'onde différente ; et un mécanisme d'entraînement (51, 55) est présent pour déplacer le second dispositif de filtrage, de manière à positionner ainsi, dans le trajet optique de ladite lumière fluorescente, un filtre d'interférence spécifié (44) dudit second dispositif de filtrage (52) qui permet le passage d'un faisceau de lumière fluorescente d'une longueur d'onde désirée.

3. Système de microscope à fluorescence pour mesurer la caractéristique analytique d'un échantillon à partir soit du spectre de fluorescence, soit du spectre d'excitation d'une sonde à fluorescence introduite dans l'échantillon, **caractérisé** par le fait qu'il comprend :
- une source lumineuse (2) pour émettre une lumière d'excitation de manière à exciter la sonde à fluorescence ;
- un filtre d'interférence (5) placé dans l'axe optique de ladite source lumineuse (2) pour permettre le passage uniquement du faisceau de lumière d'excitation qui a une longueur d'onde prédéterminée ;
- un premier système optique (7, 8) pour amener le faisceau de lumière d'excitation à traverser ledit filtre d'interférence (5) de manière qu'il tombe sur une zone spécifiée d'un échantillon (10) dans lequel une sonde à fluorescence a été introduite ;
- un dispositif de filtrage (52) pour filtrer la lumière fluorescente émise par la zone spécifiée de l'échantillon (10) quand le faisceau de lumière d'excitation est appliqué à cette zone, le dispositif précité (52) comportant une pluralité de filtres d'interférence (44) pour permettre le passage de faisceaux de lumière fluorescente ayant chacun une longueur d'onde différente ;
- un mécanisme d'entraînement (51, 55) pour déplacer ledit dispositif de filtrage, de manière à positionner ainsi dans le trajet optique de la lumière fluorescente, un filtre d'interférence spécifié (44) permettant le passage d'un faisceau de lumière fluorescente d'une longueur d'onde désirée ;
- un moyen (11) de division de faisceaux placé dans le trajet optique du faisceau de lumière fluorescente traversant le filtre d'interférence spécifié (44) pour diviser le faisceau de lumière fluorescente en des premier et second faisceaux ;
- un second système optique (60a, 60b, 61), comprenant une lentille d'oculaire (12), pour focaliser le premier faisceau, de manière à former ainsi une image fluorescente de la zone spécifiée de l'échantillon (10) ;
- un troisième système optique (60c, 56) pour focaliser le second faisceau, de manière à former ainsi une image fluorescente de la zone spécifiée de l'échantillon (10) ;
- un caméra de télévision (13) pour convertir, en des données électriques d'image, l'image fluorescente formée par ledit troisième système optique (60c, 56) ; et
- un dispositif (14, 15) de traitement d'image pour traiter les données d'image fournies par ladite caméra de télévision (13), de manière à former ainsi une image représentant la distribution des valeurs de la caractéristique analytique mesurée dans la zone spécifiée de l'échantillon (10) ; ledit dispositif de traitement d'image (15) obtient la valeur de chaque partie de l'échantillon (10) à partir de l'intensité du faisceau de lumière fluorescente fournie au pixel de ladite caméra de télévision (13) qui correspond à cette partie de l'échantillon (10) conformément à une courbe d'étalonnage déjà introduite dans le dispositif de traitement d'image (15), et forme une image qui représente la distribution des valeurs de la partie de l'échantillon (10) ;
- ladite caractéristique analytique à chaque partie de l'échantillon (10) est calculée à partir du rapport entre les intensités de deux faisceaux de lumière fluorescente ayant des longueurs d'onde différentes.

4. Système de microscope à fluorescence selon la revendication 1, 2 ou 3, **caractérisé** par le fait qu'il comprend, en outre, un moyen (24, 29) d'absorption de vibrations, fixé audit mécanisme d'entraînement (18 ; 26, 27, 28, 30, 31).

5. Système de microscope à fluorescence selon l'une quelconque des revendications 1 à 4, **caractérisé** en ce que ledit premier dispositif de filtrage (6) et/ou ledit second dispositif de filtrage (52) est une combinaison de filtres d'interférence (5, 44) et de filtres (4, 45) à densité neutre.

6. Système de microscope à fluorescence selon l'une quelconque des revendications 1 à 5, **caractérisé** par le fait qu'il comprend, en outre, une source (20a) de lumière visible pour fournir la lumière visible nécessaire pour l'examen au microscope de l'échantillon (10).

7. Système de microscope à fluorescence selon l'une quelconque des revendications 1 à 6, **caractérisé** en ce que ledit dispositif (15) de traitement d'image attribue une couleur spécifique à la valeur de la caractéristique analytique à chaque partie de l'échantillon (10), de manière à former ainsi une image en couleur qui représente la distribution des valeurs des parties de l'échantillon (10).
